# EUROPÄISCHE PATENTSCHRIFT

(11) **EP 0 798 647 B1**
(45) Veröffentlichungstag und Bekanntmachung des Hinweises auf die Patenterteilung: **10.07.2002**
(21) Anmeldenummer: 97103547.2
(22) Anmeldetag: 04.03.1997
(51) Int. Cl.: G06F 13/40

(54) **Anordnung zum Anschluss eines Gerätes an ein Leitungssystem**
Arrangement for connecting a device to a power line system
Dispositif de connexion d'un appareil au système de lignes d'alimentation

(30) Priorität: 25.03.1996 DE 19611696
(43) Veröffentlichungstag der Anmeldung: 01.10.1997
(73) Patentinhaber: Fujitsu Siemens Computers GmbH, 81739 München (DE)
(72) Erfinder: Aarts, Jacobus, 86199 Augsburg (DE)
(74) Vertreter: Epping, Wilhelm, Dipl.-Ing.

(56) Entgegenhaltungen:
- EP-A- 0 345 584
- EP-A- 0 558 770
- EP-A- 0 658 850

## Beschreibung

Die Erfindung betrifft eine Anordnung zum Anschluß eines Gerätes an ein Leitungssystem, das unter Spannung steht, wobei störende Auswirkungen infolge eines plötzlichen Anstiegs oder Abfalls der Versorgungsspannungen vermieden werden sollen. Letzteres ist insbesondere dann von Bedeutung, wenn es sich bei den Geräten z.B. um Systemkomponenten am Systembus einer Rechneranordnung handelt, so daß zusätzlich undefinierte logische Zustände am Systembus ausgelöst werden können.

Bei einer aus US 5.210.855 bekannten Lösung mit einer Mehrebenensteckverbindung sind drei Kontaktebenen vorgesehen, von denen eine erste zur Kontaktierung des Masseanschlusses, eine zweite zur Kontaktierung der Versorgungsspannungsanschlüsse und eine dritte zur Kontaktierung von Datenanschlüssen dient. Auf diese Weise erfolgt die Kontaktierung bzw. Abkontaktierung der verschiedenen Kontaktebenen zeitlich nacheinander. Dadurch werden z.B. die Datenleitungen erst durchgeschaltet, wenn die über einen Regler nachgeregelte Versorgungsspannung voll wirksam ist.

EP0558770 offenbart eine Anordnung, gemäß welcher in einer ersten Kontaktebene eine Versorgungsspannung sowie die Masseleitung und über eine zweite Kontaktebene das Nutzsignal bzw. Datensignal angeschlossen wird.

EP0658850 offenbart eine Anordnung, gemäß welcher über eine erste Kontaktebene die Masseleitung und ein Vorspannungstreibersignal, über eine zweite Kontaktebene das Datensignal und über eine nachfolgende Kontakteben die allgemeine Versorgungsspannung angeschlossen wird. Noch vor dem Anschluß des Datensignals wird der dazugehörige Pin auf das Vorspannungsniveau gebracht, um störende kapazitive Effekte auf das allgemeine Leitungssystem zu vermeiden.

Die Erfindung hat nun eine einfachere und sicherer arbeitende Anordnung zum Gegenstand, die den Anschluß bzw. das Entfernen von Geräten an bzw. von einem Leitungssystem störungsfrei ermöglicht.

Diese Aufgabe wird durch die Merkmale des Patentanspruches 1 gelöst.

Bei der neuen Lösung werden nur zwei Kontaktebenen für die Steckvorrichtung verwendet, wobei die Spannungsversorgungsund Steuerkontakte in zwei verschiedenen Kontaktebenen liegen, von denen die eine mit den Steuerkontakten zuletzt kontaktiert. Dabei wird ein die Kontaktierung kennzeichnendes Zustandssignal ausgelöst, durch das dann die Durchschaltung der Versorgungsspannung an die zugehörigen Kontakte der Steckvorrichtung erfolgt. Läßt man die Versorgungsspannungen dabei weich ansteigen, dann ist auch ein störungsfreies Anstecken des Gerätes an das unter Spannung stehende Leitungssystem in einfacher Weise möglich.

Weiterbilduungen der Erfindung ergeben sich aus den Unteransrpüchen, wobei das Zustandssignal auch zur Erzeugung eines Rücksetzsignales beim Anschluß an den Systembus einer-Rechneranordnung herangezogen werden kann, so daß letztere nicht in den Haltezustand überzugehen braucht.

Einzelheiten der Erfindung seien nachfolgend anhand eines in der Zeichnung dargestellten Ausführungsbeispieles näher erläutert. Im einzelnen zeigen
- FIG 1: ein Prinzipschaltbild der Anordnung gemäß der Erfindung und
- FIG 2: den zeitlichen Verlauf der beim An- und Abkontaktieren entstehenden Signale.

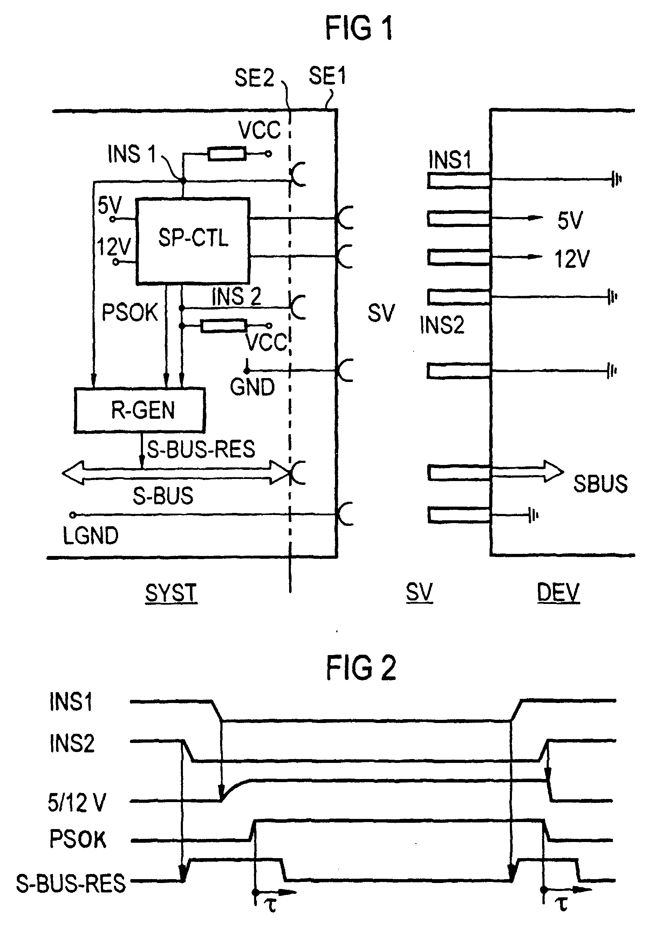

Dem Ausführungsbeispiel von FIG 1 ist eine Rechneranordnung mit dem Systemteil SYST und dem Systembus S-BUS im linken Teil der Figur zugrundegelegt, an den als sogenannten SCSI-Bus SCSI-Platten als Geräte DEV über die als SCA-Steckverbinder ausgebildete Steckvorrichtung SV anschaltbar sind.

Die Steckvorrichtung SV weist insgesamt nur zwei Kontaktebenen SE1 und SE2 auf. In der beim Zusammenstecken zunächst kontaktierenden Kontaktebene SE1 werden die Kontakte für die Versorgungsspannungen 5V und 12V und das Massepotential GND bzw. LGND hergestellt. In der anderen Kontaktebene liegen die Kontakte für den Systembus S-BUS und die Signale INS1 und INS2.

Die Kontakte für die Versorgungsspannungen 5V/12V sind zunächst spannungsfrei. Erst wenn in der Kontaktebene SE2 die beiden die Zustandssignale INS1 und INS2 auslösenden Kontakte geschlossen sind, wird über die Spannungskontrollschaltung SP-CTL die Spannung an den Ausgangskontakten weich hochgeregelt und der Spannungsanstieg überwacht. Haben alle Spannungen an den Ausgangskontakten die vorgegebenen Werte erreicht, wird das Signal PSOK ausgelöst.

Im allgemeinen würde eines der beiden Zustandssignale INS... für die Steuerung ausreichen. Werden aber, wie im vorliegenden Fall, die Kontakte für die Versorgungsspannungen beidseitig von einem ein Zustandssignal INS... erzeugenden Kontakt eingerahmt, und die Koinzidenz beider Signale für die Steuerung ausgewertet, so kann auch ein Verkanten beim Zusammenstecken nicht zu störenden Schaltzuständen führen.

Andererseits wird mit dem jeweils ersten beim Kontaktieren auftretenden bzw. mit dem ersten beim Dekontaktieren entfallenden Zustandssignal INS... jeweils der Generator R-GEN für die Erzeugung eines Rücksetzsignales S-BUS-RES auf dem Systembus S-BUS wirksamgeschaltet. Die Überwachung kann in einfacher Weise mit einem EXOR-Glied erfolgen.

Die entsprechenden Signalverläufe auf der Systemseite SYST sind in FIG 2 dargestellt.

Dabei ist ersichtlich, daß jeweils mit jedem sich als erstes ändernden Zustandssignal INS... das Rücksetzsignal S-BUS-RES eingeschaltet und mit jedem sich als letztes ändernden Zustandssignal INS... die Spannungsversorgungen ein- bzw. abgeschaltet werden. Das Rücksetzsignal muß diese Zeitpunkte überdauern, damit störende Auswirkungen vermieden werden. Die Aufrechterhaltung des jeweils wiksamen Rücksetzsignales wird daher abhängig vom Signal PSOK gesteuert, indem ausgehend von der jeweiligen Signalflanke des Signales PSOK das Rücksetzsignal noch für eine vorgegebene Zeitdauer τ aufrechterhalten wird. Das Leitungssystem S-BUS wird daher immer erst wieder freigegeben, wenn die Spannungsänderungen vollzogen sind.

## Patentansprüche

1. Anordnung zum Anschluß eines Gerätes (DEV) an ein unter Spannung stehendes Leitungssystem (S-BUS) unter Verwendung einer Mehrebenen-Steckvorrichtung (SV) mit zwei Kontaktebenen (SE1, SE2), von denen die erste Kontaktebene (SE1) zur Kontaktierung der Anschlüsse für die Versorgungsspannungen 5/12V und des Massepotentials (GND, LGND) dient, während über die zweite Kontaktebene (SE2) Verbindungen für Steuersignale hergestellt werden, **dadurch gekennzeichnet, daß** die Versorgungsspannungen zu den Kontakten der zweiten Kontaktebene (SE2) erst durchgeschaltet werden, wenn über die Steuersignale der zweiten Kontaktebene (SE2) ein die Kontaktierung kennzeichnendes Zustandssignal (INS...) vorliegt.

2. Anordnung nach Anspruch 1,
**dadurch gekennzeichnet,**
**daß** die Kontakte für die Versorgungsspannungen 5/12V in der ersten Kontaktebene (SE1) von Kontakten für die die Kontaktierung kennzeichnenden Zustandssignale (INS1,INS2) in der zweiten Kontaktebene (SE2) umgeben sind.

3. Anordnung nach Anspruch 1 oder 2,
**dadurch gekennzeichnet,**
**daß** die Versorgungsspannungen 5/12V an den Kontakten der Steckvorrichtung (SV) nur wirksam geschaltet werden, wenn alle eine Kontaktierung kennzeichnende Zustandssignale (INS1, INS2) vorliegen.

4. Anordnung nach einem der Ansprüche 1 bis 3, für den Anschluß von Systemkomponenten (DEV) an den Systembus (S-BUS) einer Rechneranordnung ohne deren Übergang in den Haltezustand,
**dadurch gekennzeichnet,**
**daß** mit dem beim Kontaktieren jeweils zuerst wirksam bzw. beim Dekontaktieren jeweils zuerst unwirksam werdenden Zustandssignal (INS1 oder INS2) ein Rücksetzsignal (S-BUS-RES) wirksam geschaltet wird, das vor der Zu- bzw. Abschaltung der Versorgungsspannungen 5/12V für die Systemkomponenten (DEV) am Systembus (S-BUS) wirksam wird.

5. Anordnung nach einem der Ansprüche 1 bis 4,
**dadurch gekennzeichnet,**
**daß** die Versorgungsspannungen zum Wirksamwerden weich hochgeregelt werden.

6. Anordnung nach Anspruch 5,
**dadurch gekennzeichnet,**
**daß**, solange die Spannungen an den durchschaltenden Kontakten einen vorgegebenen Spannungswert überschreiten, ein Steuersignal (PSOK) erzeugt wird, das mit seiner Vorder- bzw. Rückflanke das jeweilige Rücksetzsignal (S-BUS-RES) abschaltet.

7. Anordnung nach Anspruch 6,
**dadurch gekennzeichnet,**
**daß** die Abschaltung des Rücksetzsignales (S-BUS-RES) jeweils verzögert wirksam wird.

8. Anordnung nach einem der Ansprüche 1 bis 7,
**dadurch gekennzeichnet,**
**daß** beim Durchschalten mehrerer verschiedener Versorgungsspannungen das Steuersignal (PSOK) für die Abschaltung des Rücksetzsignales (S-BUS-RES) erst erzeugt wird, wenn alle Versorgungsspannungen die vorgegebenen Spannungswerte erreicht haben.

## Claims

1. Arrangement for connecting a device (DEV) to a live line system (S-BUS) using a multi-plane plug device (SV) with two contact planes (SE1, SE2), of which the first contact plane (SE1) serves for making contact with the terminals for the supply voltages 5/12 V and the earth potential (GND, LGND) while connections for control signals are produced via the second contact plane (SE2), **characterized in that** the supply voltages are only switched through to the contacts of the second contact plane (SE2) if a state signal (INS...) indicating the contact-making is present via the control signals of the second contact plane (SE2).

2. Arrangement according to Claim 1,
**characterized**
**in that** the contacts for the supply voltages 5/12 V in the first contact plane (SE1) are surrounded by contacts for the state signals (INS1, INS2) indicating the contact-making in the second contact plane (SE2).

3. Arrangement according to Claim 1 or 2,
**characterized**
**in that** the supply voltages 5/12 V are activated at the contacts of the plug device (SV) only if all the state signals (INS1, INS2) indicating contact-making are present.

4. Arrangement according to one of Claims 1 to 3, for connecting system components (DEV) to the system bus (S-BUS) of a computer arrangement without the latter undergoing transition to the hold state,
**characterized**
**in that** with the state signal (INS1 or INS2) which in each case becomes active first when contact is made or in each case becomes inactive first when contact is broken, a reset signal (S-BUS-RES) is activated which becomes active before the connection or disconnection of the supply voltages 5/12 V for the system components (DEV) on the system bus (S-BUS).

5. Arrangement according to one of Claims 1 to 4,
**characterized**
**in that**, for the purpose of becoming active, the supply voltages are softly regulated upwards.

6. Arrangement according to Claim 5,
**characterized**
**in that** as long as the voltages at the switching-through contacts exceed a predetermined voltage value, a control signal (PSOK) is generated which, with its leading or trailing edge, disconnects the respective reset signal (S-BUS-RES).

7. Arrangement according to Claim 6,
**characterized**
**in that** the disconnection of the reset signal (S-BUS-RES) in each case becomes active in a delayed manner.

8. Arrangement according to one of Claims 1 to 7,
**characterized**
**in that** when a plurality of different supply voltages are switched through, the control signal (PSOK) for the disconnection of the reset signal (S-BUS-RES) is generated only when all the supply voltages have reached the predetermined voltage values.

## Revendications

1. Dispositif de connexion d'un appareil (DEV) à un système (S-BUS) de lignes sous tension en utilisant un dispositif (SV) d'enfichage à plusieurs plans ayant deux plans (SE1, SE2) de contact, dont le premier plan (SE1) de contact sert à établir le contact des bornes pour les tensions 5/12 V d'alimentation et du potentiel (GND, LGND) de masse, tandis qu'il est ménagé par le deuxième plan (SE2) de contact des liaisons pour des signaux de commande, **caractérisé en ce que** les tensions d'alimentation ne s'appliquent au contact du deuxième plan (SE2) de contact que s'il s'applique, par les signaux de commande au deuxième plan (SE2) de contact, un signal (INS...) d'état caractérisant l'établissement du contact.

2. Dispositif selon la revendication 1,
**caractérisé en ce que** les contacts pour les tensions 5/12 V d'alimentation du premier plan (SE1) de contact sont entourés de contacts pour les signaux (INS1, INS2) d'état caractérisant l'établissement du contact dans le deuxième plan (SE2) de contact.

3. Dispositif selon la revendication 1 ou 2,
**caractérisé en ce que** les tensions 5/12V d'alimentation ne s'appliquent de manière efficace aux contacts du dispositif (SV) d'enfichage que si tous les signaux (INS1, INS2) d'état caractérisant un établissement de contact sont présents.

4. Dispositif selon l'une des revendications 1 à 3, pour la connexion de composants (DEV) de système au bus (S-BUS) de système d'un dispositif informatique sans leur transmission à l'état de maintien,
**caractérisé en ce que**, par le signal (INS1 ou INS2) d'état devenant, lors de l'établissement du contact, respectivement d'abord efficace ou, lors de la rupture du contact, respectivement d'abord inefficace, il est appliqué de manière efficace un signal (S-BUS-RES) de remise à zéro qui devient efficace avant l'application ou l'interruption des tensions 5/12 V d'alimentation pour les composants (DEV) du système au bus (S-BUS) du système.

5. Dispositif selon l'une des revendications 1 à 4,
**caractérisé en ce que** les tensions d'alimentation sont réglées de manière souple à un niveau haut pour devenir efficaces.

6. Dispositif selon la revendication 5,
**caractérisé en ce que**, tant que les tensions sur les contacts dans lesquels passe du courant dépassent une valeur prescrite de tension, il est produit un signal (PSOK) de commande qui, par son front avant ou arrière, arrête le signal (S-BUS-RES) de remise à zéro respectif.

7. Dispositif selon la revendication 6,
**caractérisé en ce que** l'arrêt du signal (S-BUS-RES) de remise à zéro devient efficace respectivement de manière retardée.

8. Dispositif selon l'une des revendications 1 à 7,
**caractérisé en ce que**, lors de l'application de plusieurs tensions différentes d'alimentation, le signal (PSOK) de commande pour l'arrêt du signal (S-BUS-RES) de remise à zéro n'est produit que si toutes les tensions d'alimentation ont atteint les valeurs prescrites de tension.
